# EUROPÄISCHE PATENTSCHRIFT

(11) **EP 3 925 872 B1**
(45) Veröffentlichungstag und Bekanntmachung des Hinweises auf die Patenterteilung: **25.12.2024**
(21) Anmeldenummer: 21180039.6
(22) Anmeldetag: 17.06.2021
(51) Int. Cl.: B63H 9/02, B63H 25/40, F03D 1/06, F03D 3/00

(54) **GEWICKELTER ROTOR**
WRAPPED ROTOR
ROTOR ENROULÉ

(30) Priorität: 18.06.2020 DE 102020116103
(43) Veröffentlichungstag der Anmeldung: 22.12.2021
(73) Patentinhaber: ECO Flettner GmbH, 26789 Leer (DE)
(72) Erfinder: Bleyer, Hermann, 26725 Emden (DE); Lais, Siegfried, 56322 Spay (DE); Oltmanns, Ralf, 26789 Leer (DE)
(74) Vertreter: Hauck Patentanwaltspartnerschaft mbB

(56) Entgegenhaltungen:
- WO-A1-96/26887
- CN-A- 111 003 130
- DE-U1- 202009 015 089
- DE-U1- 202020 101 470
- GB-A- 2 477 078
- GB-A- 2 524 753

## Beschreibung

Die vorliegende Erfindung betrifft ein Verfahren zur Herstellung eines Magnus-Rotors. Der Magnus-Rotor wird gelegentlich auch als Flettner-Rotor bezeichnet. Das Prinzip des Magnus-Rotors beruht auf dem sogenannten Magnus-Effekt, wonach ein rotierender Körper aufgrund von Sog- und Staudruckkräften eine quer zur Anströmrichtung gerichtete Ablenkungskraft erfährt.

Der Magnus-Rotor besteht in der Regel aus einem senkrecht stehenden, hohen, rotierenden Zylinder aus Blech oder einem Verbundwerkstoff und besitzt an seinem freien Ende eine sogenannte Endscheibe, die die Strömung am Rohr halten und damit den Wirkungsgrad des Rotors verbessert. Der Magnus-Rotor wird durch einen externen Antrieb, beispielsweise einem elektrischen Antrieb, gedreht, wobei seine Drehgeschwindigkeit an die Windverhältnisse angepasst wird. Magnus-Rotoren können in verschiedenen technischen Gebieten eingesetzt werden, wobei ein wichtiger Einsatz im Bereich der Schifffahrt liegt. Hier werden Magnus-Rotoren oft als Hilfsantriebe eingesetzt und führen zu einer nicht unerheblichen Reduzierung von COz-Emissionen.

Aus GB 2,477,078 A ist ein Magnus-Rotor bekannt geworden, dessen Rotorkörper aus einer Vielzahl an Kunststoff- und Leichtbauabschnitten besteht, die entlang der Längsrichtung des Rotors übereinander angeordnet sind. Durch diesen Aufbau mit einzelnen übereinander angeordneten Sektionen wird der Transport und die Installation des Magnus-Rotors vereinfacht. Hinzu kommt, dass im Inneren des Magnus-Rotors ein Gerüst in Leichtbauweise vorgesehen ist, das Querstreben und Befestigungsplatten vorsieht. Auf dem freien Ende des Gerüsts ist der Rotorkörper drehbar gelagert.

Aus GB 2,524,753 A ist ein Verfahren zur Herstellung eines Rotorkörpers für einen Magnus-Rotor bekannt geworden. Das Verfahren schließt ein, dass eine Vielzahl von gebogenen Paneelen zu einem in Umfangsrichtung geschlossenen Segment zusammengesetzt und mehrere Segmente übereinander angeordnet werden, um den Rotorkörper zu bilden.

Aus CN 103906680 A ist ein variables Vertikalsegelsystem mit mehreren Magnus-Rotoren für ein Schiff bekannt geworden. Die Magnus-Rotoren besitzen einen äußeren Segelzylinder, der aus einer Hülle in Leichtbauweise hergestellt ist, wobei hier bevorzugt Aluminium verwendet wird. Befestigt ist die Umhüllung an aus Stahl oder anderem Material hergestellten Rahmenelementen, die die zylindrische Struktur bereitstellen.

Aus CN 1113130 A ist ein Magnusrotor bekannt, bei dem mindestens zwei Zylindersektionen mit gleichem Durchmesser über einen Verbindungsflansch miteinander verbunden werden. Diese werden dann dynamisch ausgewuchtet.

Aus GB 2477078 A ist ein Magnusrotor bekannt, der eine Trägerstruktur mit mehreren Abschnitten aufweist, an denen Plattenelemente angebracht sind.

Aus DE 20 2000 015 089 U1 ist eine Rotor Vorrichtung bekannt geworden, die als Seitenstrahlruder bei Schiffen eingesetzt werden kann.

Für den Betrieb des Magnus-Rotors ist es wichtig, dass der rotierende, aufrechtstehende Zylinder keine Unwuchten besitzt. Allgemein liegt eine Unwucht vor, wenn bei einem rotierenden Körper dessen (momentane) Rotationsachse nicht mit einer seiner Hauptträgheitsachsen zusammenfällt. In diesem Fall führen die Unwuchten zu Vibrationen, die beispielsweise zu Beschädigungen in Wälzlagern führt. Praktisch relevant sind häufig statische und dynamische Unwuchten, wobei auch Unwuchten höherer Ordnung auftreten können. Bei der statischen Unwucht fällt die Drehachse des Körpers nicht mit seinem Schwerpunkt zusammen. Es erfolgt also eine Kreisbewegung des Schwerpunkts um die momentane Rotationsachse, wodurch ein Vibrieren in dem Rotorkörper entsteht. Bei der dynamischen Unwucht fällt die Rotationsachse nicht mit einer stabilen Hauptträgheitsachse des Rotorkörpers zusammen, läuft aber durch den Schwerpunkt. Hierbei tritt eine Taumelbewegung des Rotorkörpers auf, die auch als Flattern bezeichnet werden kann. Beide Effekte können durch das Anbringen von Gewichten an geeigneten Positionen des Rotorkörpers reduziert und teilweise vollständig unterdrückt werden. Dieses Verfahren ist in der Regel für den Magnus-Rotor sehr zeitaufwendig.

Der Erfindung liegt die Aufgabe zugrunde, ein Verfahren zur Herstellung eines Magnus-Rotors bereitzustellen, dessen Unwucht möglichst gering ist.

Erfindungsgemäß wird die Aufgabe durch ein Verfahren mit den Merkmalen aus Anspruch 1 gelöst. Vorteilhafte Ausgestaltungen bilden die Gegenstände der Unteransprüche.

Erfindungsgemäß wird die Aufgabe durch ein Verfahren mit den Merkmalen aus Anspruch 1 gelöst. Das erfindungsgemäße Verfahren betrifft die Herstellung eines Magnus-Rotors mit mindestens einem Rotorkörper, der eine Längsachse aufweist. Das Verfahren umfasst dabei den Verfahrensschritt, ein Innenmodell für den mindestens einen Rotorkörper bereitzustellen. Das Innenmodell wird zur Beschichtung mit einem Faserverbundwerkstoff gelagert, wobei hierzu insbesondere die Umfangsfläche des Innenmodells freiliegt, um einen Faserverbundwerkstoff aufzubringen. Das zur Beschichtung mit dem Faserverbundwerkstoff gelagerte Innenmodell wird mit einem Fasermaterial und unter Zuführung von einem Kunststoffmaterial zur Herstellung des Faserverbundmaterials umwickelt. Das Innenmodell besitzt dabei die Aufgabe eines Wickeldorns. Der Vorgang des Umwickelns bedeutet, dass in einem zumindest teilweise kontinuierlichen Prozess das Fasermaterial auf das Innenmodell in Umfangsrichtung aufgebracht werden. Abschließend, bevorzugt nach einem Aushärten des Faserverbundmaterials, wird das Innenmodell entfernt und ein gewickelter Körper aus faserverstärktem Verbundmaterial bleibt. Im Hinblick auf die technische Aufgabe des Problems liegt dem gewählten Herstellungsverfahren die Erkenntnis zugrunde, dass durch den Wicklungsprozess ein in Umfangsrichtung sehr gleichmäßiger Materialauftrag erfolgen kann, der Unwuchten für den Rotorkörper vermeidet oder zumindest deutlich reduziert. Statische Unwuchten können beispielsweise nahezu vollständig durch eine gleichförmige Wicklung vermieden werden.

In einer bevorzugten Weiterbildung des erfindungsgemäßen Verfahrens besteht der Magnus-Rotor genau aus einem gewickelten Rotorkörper. Dies bedeutet, das Innenmodell erstreckt sich in Längsrichtung mindestens so lang, wie der Rotorkörper. Indem der Rotorkörper des Magnus-Rotors in einem Stück als gewickelter Rotorkörper hergestellt wird, können Unwuchten, die durch ein Zusammensetzen von Segmenten oder Sektionen des Rotorkörpers entstehen, vermieden werden. Unwuchten die durch das Zusammensetzen von Segmenten und Sektionen entstehen wirken sich häufig als dynamische Unwuchten aus, die deutlich schwieriger auszuwuchten sind, als statische Unwuchten. Der einstückige Aufbau stellt über das Wickeln nicht nur einen in Umfangsrichtung gleichmäßigen Aufbau sicher, sondern kann auch in Längsrichtung des Rotors die gewünschte Wandstärke sicherstellen.

Im Hinblick auf das Wickeln des Fasermaterials können zwei grundlegende Ansätze unterschieden werden. Einerseits ist es möglich, Wickellagen aufzubringen und diese auf den Innenmodell zur Bildung des Rotorkörpers gleichmäßig zu wickeln. Alternativ, aber auch zusätzlich ist es möglich, einzelne Fasern auf das Innenmodell zu wickeln und mit dem Kunststoffmaterial zu verbinden. Beide Ansätze können auch miteinander kombiniert werden. Der Wicklungsvorgang kann grundsätzlich durch eine Rotation des Innenmodells gegenüber einer Einrichtung, die das Fasermaterial aufbringt oder durch eine rotierende Zuführung des Fasermaterials relativ zu dem Innenmodell erfolgen. Auch beide Bewegungen können für die Wicklung des Fasermaterials kombiniert miteinander eingesetzt werden.

Bei dem erfindungsgemäßen Verfahren können Glasfasern, Kohlenstofffasern oder Aramidfasern eingesetzt werden, wobei bei einem Aufbringen des Fasermaterials in Wickellagen kurze und lange Fasern eingesetzt werden können, während beim direkten Aufbringen von einzelnen Fasern in die Wicklung auch Endlosfasern eingesetzt werden können.

Das verwendete Kunststoffmaterial kann Epoxidharz, Vinylesterharz und Phenolformaldehydharz oder Kombinationen dieser sein.

In einer bevorzugten Ausgestaltung ist der Rotorkörper als ein zylindrisches, bevorzugt als ein kreiszylindrisches Rohr gewickelt. Bevorzugt kann hierbei eine gleichmäßige Wandstärke eingesetzt werden. Obwohl auch Magnus-Rotoren bekannt sind, bei denen wendelförmige Leitbleche entlang dem Umfang angebracht sind, besitzt der erfindungsgemäße Rotorkörper bevorzugt überwiegend eine einheitliche Außenkontur.

Für die Verwendung des Rotorkörpers in einem Magnus-Rotor ist ein Flanschanschlussbereich vorgesehen. Der Flanschanschlussbereich ist dafür bestimmt, eine Endscheibe des Magnus-Rotors zu halten. Erfindungsgemäβ wird der Flanschanschlussbereich ebenfalls gewickelt und kann beispielsweise eine Bohrung oder eine Ausnehmung für ein Befestigungsmittel zur Anbringung der Endscheibe aufnehmen.

In einer bevorzugten Weiterbildung ist in einem Bereich für eine Nabe des Rotorkörpers eine größere Wandstärke vorgesehen, um Lagerkräfte des Magnus-Rotors aufzunehmen. Der Rotorkörper wird zu seiner Drehung auf einer Antriebswelle oder einer sonstigen Antriebseinrichtung gelagert. Hierzu wird zur Übertragung des Drehmoments eine Verbindung zwischen dem Antrieb und dem Rotorkörper hergestellt. Diese Anbindung erfolgt im Bereich der Rotorlagerung. Je nach Ausgestaltung des Rotorkörpers kann dieser Bereich der Rotorlagerung an einer oder mehreren Stellen entlang der Längsrichtung des Rotorkörpers erfolgen, wobei auch eine endseitige Lagerung des Rotorkörpers möglich ist.

In diesem Lagerbereich greifen nicht nur durch etwaige Unwuchten erzeugten Kräfte an, sondern auch die durch den Magnus-Effekt bedingten Schubkräfte werden hier beispielsweise auf das Schiff übertragen. Insofern kann je nach gewählter Wandstärke des Rotorkörpers es erforderlich sein, im Bereich der Rotorlagerung eine erhöhte Wandstärke aus Gründen der Stabilität vorzusehen.

Neben dem vorstehend angesprochenen Flanschanschlussbereich sowie dem Bereich der Rotorlagerung, kann auch mindestens ein Endbereich des Rotorkörpers mit einer größeren Wicklungsstärke als ein zentraler Bereich des Rotorkörpers ausgebildet sein. Der verstärkte Endbereich erhöht die Stabilität des Rotorkörpers in radialer Richtung, was beispielsweise den Transport des Rotorkörpers erleichtert.

Neben den vorstehenden Bereichen größerer Wicklungsstärke ist es auch möglich, mindestens einen Strukturbereich auf dem Rotorkörper durch ein Variieren der Wicklungsstärke vorzusehen. Der Strukturbereich kann ringförmig um den Rotorkörper verlaufen oder auch wendelförmlich mit einer vorgegebenen Steigung an dem Rotorkörper ausgebildet sein. Die Strukturbereiche können verschiedene aerodynamische oder stabilitätsbildende Vorteile für den Rotorkörper bilden. Im Hinblick auf das Rotationsverhalten ist zu berücksichtigen, dass der Rotorkörper mit seiner Rotationsachse sich beispielsweise auf einem Schiff relativ zum Wind und damit zu den angreifenden Kräften bewegt. Dies erzeugt entsprechend dem Trägheitsmoment des Rotorkörpers Drehmomente und Kräfte, die möglichst gleichmäßig aufgefangen und abgeleitet werden müssen. Ein oder mehrere Strukturbereiche können hier aerodynamisch und/oder mechanisch stabilisierend wirken.

Neben der Variation der Wicklungsstärke können auch Formteile zur Strukturbildung an dem Rotorkörper eingesetzt werden. Die Formteile können ähnlich wie bei einer Sandwichbauweise beispielsweise zwischen zwei gewickelte Lagen eingebracht werden. Hierzu wird beispielsweise nach Herstellen einer ersten Wicklungslage der Wicklungsvorgang unterbrochen, das Formteil positioniert und gegebenenfalls fixiert, um dann den Wicklungsprozess fortzusetzen. Neben diesem Einwickeln des Formteils ist es auch möglich, die Formteile auf dem Innenmodell zu positionieren und zu fixieren. Dann können die Formteile umwickelt werden, um beispielsweise nach Entfernen des Innenmodells von dem ausgehärteten Faserverbundmaterial getrennt zu werden oder direkt gemeinsam mit dem Innenmodell entfernt zu werden. Die Formteile erlauben es, den Rotorkörper in seiner Form gezielt anzupassen, ohne dass die Wicklungsstärke hierfür variiert werden muss. Die Verwendung von Formteilen bietet den Vorteil, dass die Parameter für die Herstellung der Wicklung aus Faserverbundmaterial nicht variiert werden müssen, sondern gleichmäßig durchgeführt werden können.

In einer weiteren bevorzugten Ausgestaltung wird der Rotorkörper mindestens in einigen Bereichen in einer Sandwichbauweise hergestellt, bei der mindestens ein Füllkörper zwischen den Schichten vorgesehen ist. In einer besonderen Ausgestaltung ist der gesamte Rotorkörper in einer Sandwichbauweise hergestellt, so dass insgesamt ein zylindrischer Füllkörper zwischen einer inneren Schicht des Faserverbundmaterials und einer äußeren Schicht des Faserverbundmaterials vorgesehen ist. Dieser zylindrische Füllkörper kann aus schalenförmigen Elementen bestehen, die um eine erste aufgebrachte Schicht auf Faserverbundmaterial angeordnet und dann in die äußere Schicht des Faserverbundmaterials eingewickelt werden. Der Füllkörper der Sandwichbauweise kann bevorzugt als ein Schaumkörper ausgebildet sein, der sich gut mit dem faserverstärkten Verbundmaterials verbinden kann.

Neben der vorstehend bereits angesprochenen Ausgestaltung eines Rotorkörpers, der sich über die gesamte Länge erstreckt, kann der Magnus-Rotor auch aus mehreren gewickelten Rotorkörpern bestehen, die in Längsrichtung miteinander verbunden sind. Die Rotorkörper sind selbst in Umfangsrichtung geschlossen und besitzen daher die bereits oben angesprochenen Vorteile im Hinblick auf das statische Auswuchten. Gewickelt besitzen die Rotorkörper in Umfangsrichtung eine gleichmäßige Gewichtsverteilung.

Die erfindungsgemäße Aufgabe wird auch durch einen Magnus-Rotor mit den Merkmalen aus Anspruch 15 gelöst.

Der erfindungsgemäße Magnus-Rotor besitzt mindestens einen sich in Längsrichtung erstreckenden Rotorkörper aus einem Faserverbundmaterial, das als gewickeltes Faserverbundmaterial ausgebildet ist. Gewickeltes Faserverbundmaterial ist gekennzeichnet durch seine umlaufende, eingewickelte Faserstruktur. Ein gewickelter Rotorkörper besitzt den Vorteil einer gleichmäßigen Massenbelegung in Umfangsrichtung.

Bevorzugt ist der Rotorkörper in Form eines Zylinders, insbesondere eines Kreiszylinders ausgebildet, wobei mindestens eine Endscheibe an dem Rotorkörper vorgesehen ist, die in radialer Richtung über den Rotorkörper hinaussteht.

Der erfindungsgemäße Magnus-Rotor ist mit seinem Rotorkörper mit einem Lageranschluss für eine drehende Welle in seinem Inneren ausgestattet. Es können ein oder mehrere Lageranschlüsse im Inneren des Rotorkörpers vorgesehen sein. Der Lageranschluss kann endseitig des Rotorkörpers vorgesehen sein, bevorzugt befindet er sich mittig im Rotorkörper.

In einer bevorzugten Ausgestaltung besitzt der Magnus-Rotor genau einen gewickelten Rotorkörper, der sich über die gesamte Längsrichtung erstreckt.

Die vorstehende Erfindung wird nachfolgend anhand der Ausführungsbeispiele näher erläutert. Es zeigen:
- Fig. 1: einen Magnus-Rotor mit einem einstückigen Rotorkörper, der zwei Endscheiben aufweist,
- Fig. 2: einen gewickelten Rotorkörper mit einer endseitigen Verstärkung sowie einem Innenflansch zur Befestigung der Endscheibe,
- Fig. 3: einen Rotorkörper mit gewickelten, verstärkten Strukturbereichen,
- Fig. 4: in einer gegenübergestellten Ansicht einen Rotorkörper mit einem einlaminierten Schaumteil auf der linken Seite und einem herausnehmbaren Modellteil auf der rechten Seite,
- Fig. 5: einen Rotorkörper in Sandwichbauweise mit einer Schaumeinlage und
- Fig. 6: einen Rotorkörper, der aus mehreren, übereinander angeordneten Rotorkörpern besteht.

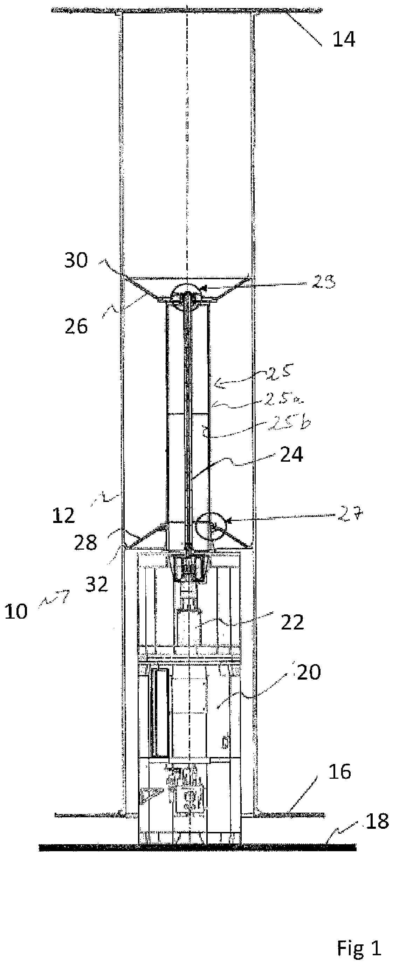

Figur 1 zeigt einen Magnus-Rotor 10, der einen Rotorkörper 12 aufweist. Der Rotorkörper 12 ist kreiszylindrisch ausgebildet und besitzt entlang der Längsrichtung eine an die Lasten angepasste Wandstärke. Ferner besitzt der Rotorkörper 12 eine obere Endscheibe 14 und eine untere Endscheibe 16, die allerdings nicht als eine geschlossene Scheibe, sondern als ein offener Scheibenring ausgebildet ist. Beide Endscheiben 14, 16 stehen im Umfang über den Rotorkörper 12 hinaus vor. Angeordnet ist der Magnus-Rotor 10 auf einem Untergrund, bei dem es sich beispielsweise um ein Schiffsdeck 18 handeln kann. Eine Antriebseinheit 20 ist auf dem Deck 18 montiert und erstreckt sich in das Innere des Rotorkörpers hinein. Über einen elektrisch betriebenen Motor 22 wird eine Antriebswelle 24 gedreht. Die Welle 24 erstreckt sich zentral in dem Rotorkörper 12 entlang dessen Rotationsachse. Ein oberes Ende der Rotorwelle 24 ist mit einer oberen Nabe 26 verbunden. Die obere Nabe 26 ist als ein kegelstumpfförmiges Lagerteil ausgebildet. Es ist aber auch möglich, die Nabe mit Streben oder Speichen auszubilden. Die obere Nabe 26 weist einen Nabenring auf, der mit dem oder den Außenringen eines Axial-Pendelrollenlagers 29 verbunden ist. Der Innenring des Lagers ist auf einem stehenden Rohr 25b angeordnet. Die Antriebswelle 24 ist im Bereich des oberen Lagers 29 mit der oberen Nabe 26 verbunden. Für die Verbindung zwischen Nabe 26 und Rotorkörper 12 besitzt der Rotorkörper 12 nach innen vorstehende Lagerflansche 30, 32. Die Lagerflansche 30, 32 sind auf der Innenseite des Rotorkörpers angeordnet und jeweils mit der oberen oder unteren Nabe verbunden. Alternative zu einem Lagerflansch 30, 32 kann die Nabe auch zwischen zwei Sektionen des Rotorkörpers gehalten sein.

In dem in Figur 1 dargestellten Ausführungsbeispiel ist die obere Nabe 26 mit der Antriebswelle 24 über das obere Lager 29 hinweg verbunden. Die Antriebswelle 24 dreht mit dem Außenring der oberen Rotorlagerung 29 die obere Nabe 26. Das Nabenrohr 25a ist außen um das stehende Rohr 25b geführt und besitzt damit eine den Rotorkörper 12 stabilisierende Funktion. Der Antrieb des Rotorkörpers 12 erfolgt an der oberen Nabe 26, die mit dem äußeren Nabenrohr 25a verbunden ist. Die obere Nabe 26 ist über die Rotorlagerung 29 auf dem feststehenden Rohr 25b gelagert.

Das untere Lager 27 sitzt mit seinem Innenring auf dem feststehenden Rohr 25b und mit seinem Außenring an dem äußeren Nabenrohr 25a und an der unteren Nabe 28. Das obere Lager 29 sitzt mit seinem Außenring in der oberen Nabe 26, die von der Antriebswelle 24 angetrieben ist und mit dem Nabenrohr 25a verbunden ist. Der Innenring des oberen Lagers 29 sitzt auf dem feststehenden Rohr 25b. Bevorzugt befindet sich ein Ölbad zwischen den feststehenden Rohren 25b und dem mitdrehenden Nabenrohr 25a, das auch das obere Rotorlager mitumfasst.

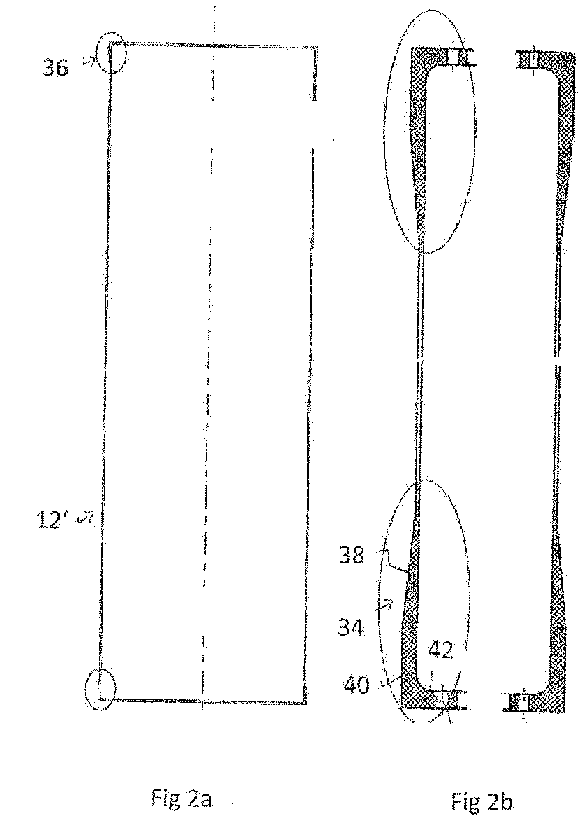

Figur 2a zeigt in einer Gesamtansicht einen Rotorkörper, der einstückig hergestellt wurde. In den Endbereichen zeigt Figur 2a eine umlaufende Verdickung 34. Entsprechend ist eine umlaufende Verdickung 36 an dem gegenüberliegenden Ende vorgesehen. Figur 2b zeigt eine Detailansicht der Verdickung. Die Verdickung 34 trägt nach außen hin auf. Dies bedeutet, dass der Innendurchmesser des Rotorkörpers einen konstanten Wert über die Länge besitzt. In einem ersten Abschnitt 38 der Verdickung 36 nimmt die Wandstärke des Rotorkörpers zu. In Figur 2b ist eine lineare Zunahme der Wandstärke in Abschnitt 38 dargestellt. Der Abschnitt 38 mit zunehmender Wandstärke geht über in einen zweiten Abschnitt 40 mit konstanter Wandstärke. Neben der Zunahme der Wandstärke in den Abschnitten 38 und 40 ist ferner ein nach innen vorstehender Flansch 42 vorgesehen, der ebenfalls umlaufend ausgebildet ist und teilweise den Rotorkörper abschließt. Der nach innen vorstehende Flansch 42 ist mit einer Bohrung 44 versehen, die vorgesehen ist, um eine Endscheibe an dem Rotorkörper 12 zu befestigen. Der nach innen vorstehende Flansch 42 kann gewickelt oder in einer sonstigen Weise hergestellt sein. Beispielsweise kann der Flansch 42 in dem Innenmodell, das zum Wickeln des Rotorkörpers verwendet wird, eingesetzt sein, so dass der gewickelte Faserverbundwerkstoff hier auf den bereits vorbereiteten Flansch aufgewickelt wird. Aber auch ein nachträgliches Anwickeln des nach innen vorstehenden Flanschs 42 ist möglich.

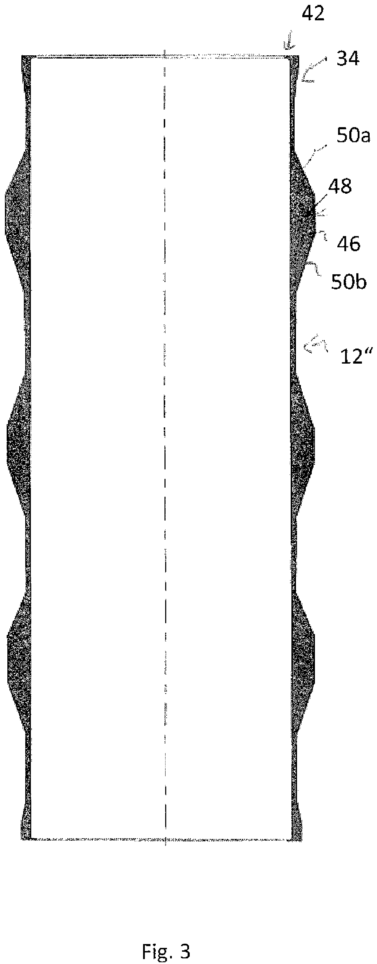

Figur 3 zeigt einen über ein Laminat hergestellten Strukturbereich 46 für einen Rotorkörper 12". Der Strukturbereich 46 besteht aus einem Bereich 48 konstanter maximaler Wanddicke, zu dem zwei Abschnitte 50a, 50b mit zunehmender Wanddicke gehören. Die Abschnitte 50a, 50b mit zunehmender Wanddicke zeigen in dem dargestellten Ausführungsbeispiel eine linear zunehmende Wandstärke. Aber es sind auch andere Formen der Wandstärkezunahme möglich. Die Strukturbereiche 46 bilden in dem dargestellten Ausführungsbeispiel der Figur 3 Rippen, die in gleichmäßigem Abstand entlang dem Rotorkörper angeordnet sind. Der Endbereich 34 ist ebenfalls wie in dem Ausführungsbeispiel aus Figur 2 verdickt ausgebildet, allerdings kommt der Außenradius der Endbereiche nicht an den maximalen Außenradius des Strukturbereichs 48 heran. Die Strukturbereiche 46 sind insofern ausgeprägter als die verdickten Endbereiche 34.

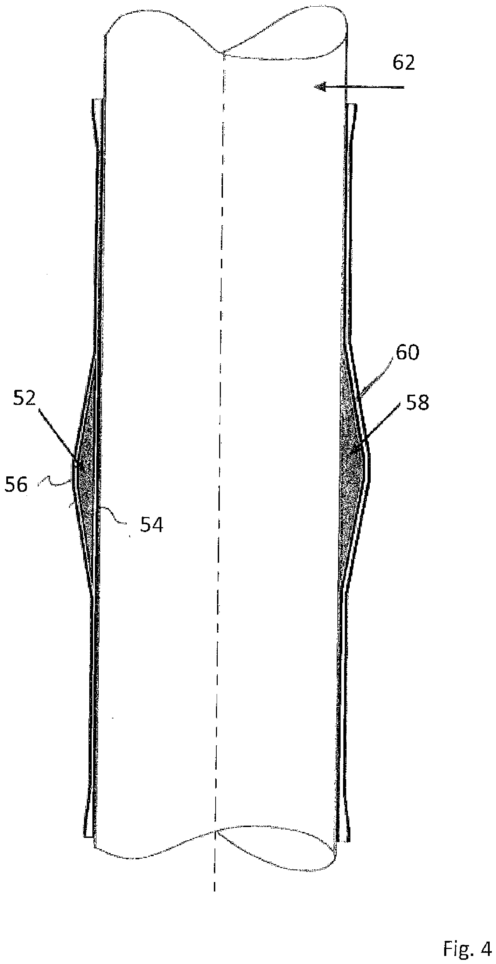

Figur 4 zeigt zwei Formen des Rotorkörpers, mit denen eine Struktur gebildet werden kann. Ein Schaumteil 52 ist auf der linken Seite der Figur 4 einlaminiert dargestellt. Einlaminiert bezieht sich hierbei auf eine innere Schicht von Faserverbundmaterial 54 und eine äußere Schicht von Faserverbundmaterial 56. Zwischen diesen Schichten ist das Schaumteil 52 angeordnet, das die Außenkontur des Rotorkörpers bestimmt.

Die rechte Seite von Figur 4 zeigt eine andere Ausgestaltung zur Erzeugung einer Außenkontur in dem Rotorkörper. Hier ist ein Modellteil 58 vorgesehen, das auf dem Innenmodell des Rotorkörpers angeordnet ist und vollständig mit dem Faserverbundwerkstoff 60 umwickelt ist. Wird das Innenmodell 62 auf dem Rotorkörper herausgenommen, kann auch das Modellteil 58 herausgenommen werden und das ausgehärtete Faserverbundmaterial verbleibt in der durch das Modellteil eingeprägten Form. Sowohl das einlaminierte Schaumteil 52 als auch das nachträglich entfernbare Modellteil 58 dienen dazu, eine Struktur für den Rotorkörper zu erzeugen. Unterschiedlich an beiden Ansätzen ist, dass das Schaumteil 52 in dem Rotorkörper verbleibt, während das Modellteil entfernt wird, so dass nur das faserverstärkte Verbundmaterial vorhanden ist.

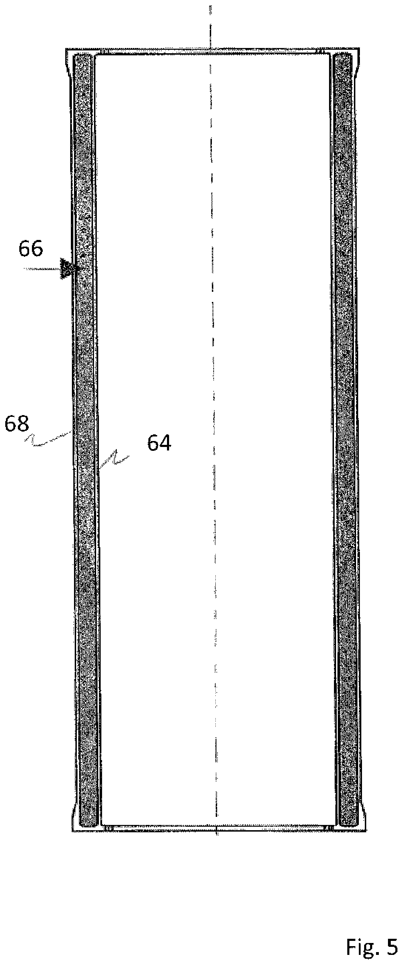

Figur 5 zeigt einen Rotorkörper, der in einer Sandwichbauweise hergestellt ist. Eine innere gewickelte Lage 64 wechselt sich mit einer Schaumeinlage 66 ab, die wiederum von einer äußeren Schicht 68 umwickelt ist. Die Schaumeinlage 66 kann in Form von einzelnen gekrümmten Bauteilen auf die gewickelte innere Lage aufgebracht werden. Die Teile schließen aneinander an und bilden so eine zylindrisch geschlossene Schaumeinlage, die nachfolgend von der äußeren gewickelten Lage 68 des Faserverbundmaterials gehalten wird.

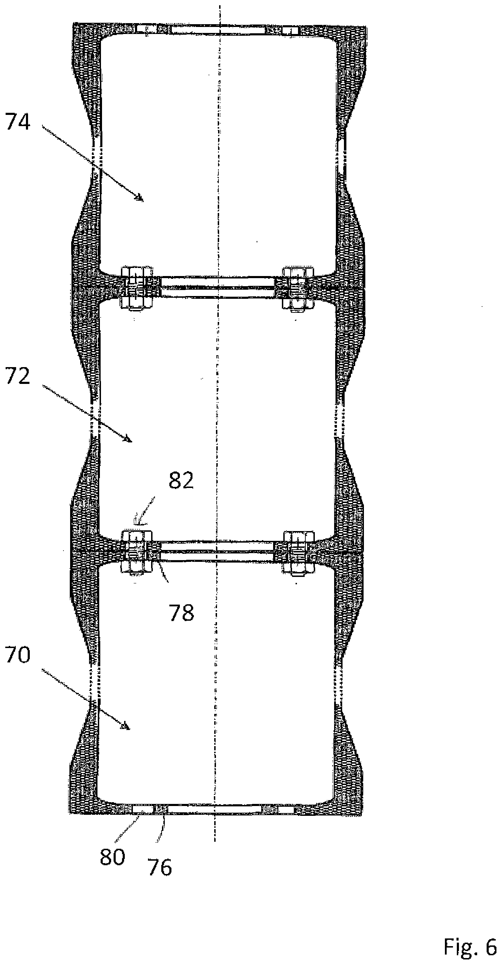

Figur 6 zeigt eine alternative Ausgestaltung des Rotorkörpers, bei dem gewickelte Rotorkörper 70, 72, 74 in Längsrichtung übereinander angeordnet sind. Jeder der Rotorkörper 70, 72, 74 besitzt an seinen beiden Enden einen Innenflansch 76, 78, der jeweils mit einer Bohrung 80 versehen ist. Indem zwei gewickelte Rotorkörper 72, 70 oder 74, 72 in Längsrichtung übereinandergesetzt werden, können diese durch Schrauben-Bolzenverbindungen 82 miteinander verbunden werden. Ein besonderer Vorteil hierbei ist, dass jeder der Rotorkörper bereits rotationssymmetrisch gewickelt ist und daher eine gleichmäßige Massenverteilung besitzt. Zudem geben die nach innen vorstehenden Befestigungsflansche mit ihren Bolzenverbindungen ausreichend Möglichkeit, um Gewichte für ein wirkungsvolles Auswuchten des gesamten Rotorkörpers herzustellen.

Der gesamte Rotorkörper ist bevorzugt als ein Zylinder ausgebildet und besitzt einen Durchmesser von 0,1 m bis 5 m oder mehr Meter. Seine Länge beträgt für die Verwendung als Magnus-Rotor üblicherweise das Ein- bis Zehnfache des Durchmessers. Der Rotorkörper ist um eine senkrechte Achse drehbar gelagert und in der Regel wird er mechanisch oder elektrisch angetrieben und in Rotation versetzt. Wird der rotierende Rotorzylinder von Wind angeströmt, erzeugt die Rotation einen Auftrieb, der für das Schiff als zusätzlicher Schub genutzt wird.

Der erfindungsgemäße Rotorkörper ist aus einem glasfaserverstärkten Kunststoff (GFK) oder einem kohlefaserverstärkten Kunststoff (CFK) hergestellt. Auch können Faserverstärkungen wie Aramid vorgesehen sein. Dabei wird ein Modell für den Innendurchmesser des Rotors hergestellt. Dieses Modell wird in der Regel drehbar um seine horizontale Achse gelagert. Während Drehung des Innenmodells wird ein kunstharzgetränktes Faserband um das Modell gewickelt. Das Wickeln kann so erfolgen, dass die gewünschte Phasenrichtung der einzelnen Wickellagen zueinander erzeugt wird. Es entsteht ein zylindrisches, faserverstärktes Rohr, dessen Wandstärke von der Anzahl der Wickellagen bestimmt wird. Je nach Ausführung des Innenmodells können am Ende des gewickelten Zylinders Flansche angewickelt werden, die nach innen oder außen geformt sind und für die spätere Befestigung der Endscheiben dienen. Zur Verstärkung von Übergängen von der Außenwand zu den Flanschen oder zur Verstärkung zylindrischer Bereiche, werden partiell mehrere Lagen übereinander gewickelt (vergleiche Figur 2).

Mit der Technik, an der Außenseite mehrere Lagen übereinander zu wickeln, kann der Zylinder teilweise verstärkt und auch mit einer größeren Oberfläche versehen werden (vergleiche Figur 3).

Vorteilhaft kann es sein, dass auf die zylindrische Modellstruktur Ringe oder Formteile aufgebracht werden, die den Zylinder in einer bestimmten Welligkeit wickeln lassen (vergleiche Figur 4). Solche zusätzlichen Modellteile können so hergestellt werden, dass sie nach dem Ausformen des Gesamtzylinders herausgenommen werden können. Alternativ oder zusätzlich können auch Schaummodelle hergestellt werden, die als Rotationsteil auf das Grundmodell aufgebracht werden. Diese Schaummodelle können für spätere Verstärkungszwecke in der Innenseite des Zylinders verbleiben und die Ausführungen von innen her verstärken. Auch ist es möglich, einen Zylinder aus mehreren Materialstrukturen zu wickeln. Beispielsweise kann eine erste GFK-Schicht gewickelt, darauf eine Schaumschicht oder eine Mattenschicht mit Hohlkörpern und dann wieder eine GFK- Schicht gewickelt werden, wodurch eine Sandwichstruktur entsteht. Die Sandwichstruktur kann auch dadurch erreicht werden, dass zwei gewickelte Rohre mit unterschiedlichen Durchmessern ineinander gestellt werden und der Zwischenraum mit Schaumstoff oder anderen Füllmaterialien ausgefüllt wird.

Nach dem Aushärten des Kunstharzes kann der gewickelte Zylinder auf seinem Wickelmodell verbleiben und die Oberfläche geschliffen und/oder lackiert werden, um unterschiedliche Oberflächenstrukturen zu erreichen.

Wenn der Zylinder ausgehärtet ist, wird er von der Wickelform abgezogen. Dabei kann es vorteilhaft sein, wenn die Wickelform eine Möglichkeit besitzt, ihren Stützdurchmesser zu verkleinern, um die Ausziehkräfte begrenzt zu halten. Der Zylinder steht dann für weitere Ausbauarbeiten oder zum Anbringen von Verstärkungen oder Haltepunkten zur Verfügung.

### Bezugszeichenliste

- 10: Magnus-Rotor
- 12: Rotorkörper
- 12": Rotorkörper
- 14: Obere Endscheibe
- 16: Untere Endscheibe
- 18: Untergrund
- 20: Antriebseinheit
- 22: Motor
- 24: Antriebswelle
- 25: Doppelrohrkonstruktion
- 25a: Äußeres Nabenrohr
- 25b: Feststehende Achse
- 26: Obere Nabe
- 27: Unteres Lager
- 28: Untere Nabe
- 29: Oberes Lager
- 30: Flansch
- 32: Flansch
- 34: Verdickung
- 36: Verdickung
- 38: Abschnitt
- 40: Abschnitt
- 42: Flansch
- 44: Bohrung
- 46: Strukturbereich
- 48: Bereich konstanter maximaler Wanddicke
- 50a: Abschnitt
- 50b: Abschnitt
- 52: Schaumteil
- 54: Inneres Faserverbundmaterial
- 56: Äußeres Faserverbundmaterial
- 58: Modellteil
- 60: Faserverbundwerkstoff
- 62: Innenmodell
- 64: Innere gewickelte Lage
- 66: Schaumeinlage
- 68: Äußere gewickelte Lage
- 70: Rotorkörper
- 72: Rotorkörper
- 74: Rotorkörper
- 76: Innenflansch
- 78: Innenflansch
- 80: Bohrung
- 82: Schrauben-Bolzenverbindung

## Patentansprüche

1. Verfahren zur Herstellung eines Magnus-Rotors (10) mit mindestens einem Rotorkörper (12), der eine Längsachse aufweist, umfassend die folgenden Verfahrensschritte:
- Bereitstellen eines Innenmodells (62) für den mindestens einen Rotorkörper (12),
- Lagerung des Innenmodells (62) zu Beschichtung mit einem FaserVerbundwerkstoff (60),
- Umwickeln des gelagerten Innenmodells (62) mit einem Fasermaterial und Zuführen von einem Kunststoffmaterial zur Herstellung des Faserverbundmaterials (60) und
- Entfernen des Innenmodells (62), wobei
- in einem Bereich einer Nabe (26, 28) des Rotorkörpers (12) eine größere Wicklungsstärke vorgesehen ist, um die Lagerkräfte des Magnus-Rotors (10) aufzunehmen und
- an dem Rotorkörper (12) mindestens ein Flanschanschlussbereich gewickelt ist, der dazu vorgesehen ist, eine Endscheibe (14, 16) für den Magnus-Rotor (10) zu halten.

2. Verfahren nach Anspruch 1, **dadurch gekennzeichnet, dass** der Magnus-Rotors (10) genau einen gewickelten Rotorkörper (12) aufweist oder der Magnus-Rotor (10) mehrere gewickelte Rotorkörper aufweist, die in Längsrichtung miteinander verbunden sind.

3. Verfahren nach Anspruch 1 oder 2, **dadurch gekennzeichnet, dass** das Fasermaterial in Form von Wickellagen um das Innenmodell (62) gewickelt wird.

4. Verfahren nach einem der Ansprüche 1 bis 3, **dadurch gekennzeichnet, dass** das Fasermaterial in Form von einzelnen Fasern einer Wicklung um das Innenmodell (62) zugeführt wird.

5. Verfahren nach einem der Ansprüche 1 bis 4, **dadurch gekennzeichnet, dass** der Rotorkörper (12) als ein zylindrisches, bevorzugt als ein kreiszylindrisches Rohr gewickelt ist.

6. Verfahren nach einem der Ansprüche 1 bis 5, **dadurch gekennzeichnet, dass** mindestens ein Endbereich mit einer größeren Wicklungsstärke als ein zentraler Bereich des Rotorkörpers (12) und/oder mindestens ein Strukturbereich auf dem Rotorkörper (12) vorgesehen ist, in dem die Wicklungsstärke variiert.

7. Verfahren nach einem der Ansprüche 1 bis 6, **dadurch gekennzeichnet, dass** das mindestens eine Formteil in das gewickelte Verbundmaterial eingewickelt oder zur Formbildung zwischen Verbundmaterial und Innenmodell (62) angeordnet wird.

8. Verfahren nach einem der Ansprüche 1 bis 7, **dadurch gekennzeichnet, dass** der Rotorkörper (12) in einer Sandwich-Bauweise mit einem Füllkörper zwischen den Schichten aufgebaut wird.

9. Magnus-Rotor (10) mit mindestens einem sich in Längsrichtung erstreckenden Rotorkörper aus einem Faserverbundmaterial, wobei der mindestens eine Rotorkörper gewickelt ist, wobei in einem Bereich einer Nabe (26, 28) des Rotorkörpers (12) eine größere Wicklungsstärke vorgesehen ist, um die Lagerkräfte des Magnus-Rotors (10) aufzunehmen, wobei an dem Rotorkörper (12) mindestens ein Flanschanschlussbereich gewickelt ist, der dazu vorgesehen ist, eine Endscheibe (14, 16) für den Magnus-Rotor (10) zu halten.

10. Magnus-Rotor (10) nach Anspruch 9, **dadurch gekennzeichnet, dass** der Rotorkörper die Form eines Zylinders, insbesondere eines Kreiszylinders aufweist.

11. Magnus-Rotor (10) nach Anspruch 9 oder 10, **dadurch gekennzeichnet, dass** der Rotorkörper mindestens eine Endscheibe aufweist, die in radialer Richtung über den Rotorkörper hinaussteht.

12. Magnus-Rotor (10) nach einem der Ansprüche 9 bis 11, **dadurch gekennzeichnet, dass** der Rotorkörper mindestens einen Lageranschluss für eine drehende Welle in seinem Inneren aufweist.

13. Magnus-Rotor (10) nach einem der Ansprüche 9 bis 12, **dadurch gekennzeichnet, dass** genau ein gewickelter Rotorkörper vorgesehen ist oder mehrere gewickelte Rotorkörper aufweist, die in Längsrichtung miteinander verbunden sind.

## Claims

1. A method of manufacturing a Magnus rotor (10) having at least one rotor body (12) which has a longitudinal axis, comprising the following method steps:
- Providing an internal model (62) for the at least one rotor body (12),
- Bearing of the inner model (62) for coating with a fibre composite material (60),
- Wrapping the beared inner model (62) with a fibre material and supplying a plastic material for producing the fibre composite material (60), and
- Removal of the inner model (62), whereby
- a greater winding thickness is provided in a region of a hub (26, 28) of the rotor body (12) in order to absorb the bearing forces of the Magnus rotor (10), and
- at least one flange connection area is wound on the rotor body (12), which is intended to hold an end disc (14, 16) for the Magnus rotor (10).

2. Method according to claim 1, **characterised in that** the Magnus rotor (10) has exactly one wound rotor body (12) or the Magnus rotor (10) has several wound rotor bodies which are connected to one another in the longitudinal direction.

3. Method according to claim 1 or 2, **characterised in that** the fibre material is wound around the inner model (62) in the form of winding layers.

4. Method according to one of claims 1 to 3, **characterised in that** the fibre material is fed in the form of individual fibres to a winding around the inner model (62).

5. Method according to one of claims 1 to 4, **characterised in that** the rotor body (12) is wound as a cylindrical, preferably as a circular cylindrical tube.

6. Method according to one of claims 1 to 5, **characterised in that** at least one end region with a greater winding thickness than a central region of the rotor body (12) and/or at least one structural region on the rotor body (12) is provided in which the winding thickness varies.

7. Method according to one of claims 1 to 6, **characterised in that** the at least one moulded part is wrapped in the wound composite material or is arranged between the composite material and the inner model (62) to form the mould.

8. Method according to one of claims 1 to 7, **characterised in that** the rotor body (12) is constructed in a sandwich design with a filler body between the layers.

9. Magnus rotor (10) with at least one longitudinally extending rotor body made of a fibre composite material, wherein the at least one rotor body is wound, wherein a greater winding thickness is provided in a region of a hub (26, 28) of the rotor body (12) in order to absorb the bearing forces of the Magnus rotor (10), wherein at least one flange connection region is wound on the rotor body (12), which is provided to hold an end disc (14, 16) for the Magnus rotor (10).

10. Magnus rotor (10) according to claim 9, **characterised in that** the rotor body has the shape of a cylinder, in particular a circular cylinder.

11. Magnus rotor (10) according to claim 9 or 10, **characterised in that** the rotor body has at least one end disc which projects beyond the rotor body in the radial direction.

12. Magnus rotor (10) according to one of claims 9 to 11, **characterised in that** the rotor body has at least one bearing connection for a rotating shaft in its interior.

13. Magnus rotor (10) according to one of claims 9 to 12, **characterised in that** exactly one wound rotor body is provided or has a plurality of wound rotor bodies which are connected to one another in the longitudinal direction.

## Revendications

1. Procédé de fabrication d'un rotor à effet Magnus (10) comprenant au moins un corps de rotor (12), lequel présente un axe longitudinal, comportant les étapes de procédé suivantes :
- mise à disposition d'un modèle intérieur (62) pour l'au moins un corps de rotor (12),
- montage du modèle intérieur (62) pour le revêtement avec un matériau composite fibreux (60),
- enroulement du modèle intérieur (62) monté avec un matériau fibreux et alimentation d'une matière plastique pour la fabrication du matériau composite fibreux (60) et
- retrait du modèle intérieur (62), dans lequel
- dans une région d'un moyeu (26, 28) du corps de rotor (12), il est prévu une plus grande épaisseur d'enroulement, afin de recevoir les forces de montage du rotor à effet Magnus (10) et
- au moins une région de raccordement de bride est enroulée sur le corps de rotor (12), laquelle est destinée au maintien d'un disque d'extrémité (14, 16) pour le rotor à effet Magnus (10).

2. Procédé selon la revendication 1, **caractérisé en ce que** le rotor à effet Magnus (10) présente exactement un corps de rotor (12) enroulé ou le rotor à effet Magnus (10) présente plusieurs corps de rotor enroulés, lesquels sont reliés les uns aux autres dans la direction longitudinale.

3. Procédé selon la revendication 1 ou 2, **caractérisé en ce que** le matériau fibreux est enroulé en forme de couches d'enroulement autour du modèle intérieur (62)

4. Procédé selon l'une des revendications 1 à 3, **caractérisé en ce que** le matériau fibreux est alimenté sous la forme de fibres individuelles d'un enroulement autour du modèle intérieur (62).

5. Procédé selon l'une des revendications 1 à 4, **caractérisé en ce que** le corps de rotor (12) est enroulé comme un tuyau cylindrique, de préférence comme un tuyau cylindrique circulaire.

6. Procédé selon l'une des revendications 1 à 5, **caractérisé en ce qu'**il est prévu au moins une région d'extrémité avec une plus grande épaisseur d'enroulement qu'une région centrale du corps de rotor (12) et/ou il est prévu au moins une région de structure sur le corps de rotor (12), dans laquelle l'épaisseur d'enroulement varie.

7. Procédé selon l'une des revendications 1 à 6, **caractérisé en ce que** l'au moins une pièce moulée est enroulée dans le matériau composite enroulé ou disposée entre le matériau composite et le modèle intérieur (62) pour la formation de forme.

8. Procédé selon l'une des revendications 1 à 7, **caractérisé en ce que** le corps de rotor (12) est construit selon une conception en sandwich, avec un corps de remplissage entre les couches.

9. Rotor à effet Magnus (10) comprenant au moins un corps de rotor constitué d'un matériau composite fibreux, s'étendant dans la direction longitudinale, dans lequel
l'au moins un corps de rotor est enroulé, dans lequel, dans une région d'un moyeu (26, 28) du corps de rotor (12), il est prévu une plus grande épaisseur d'enroulement, afin de recevoir les forces de montage du rotor à effet Magnus (10), dans lequel au moins une région de raccordement de bride destinée à maintenir un disque d'extrémité (14, 16) pour le rotor à effet Magnus (10) est enroulée sur le corps de rotor (12).

10. Rotor à effet Magnus (10) selon la revendication 9, **caractérisé en ce que** le corps de rotor présente la forme d'un cylindre, en particulier d'un cylindre circulaire.

11. Rotor à effet Magnus (10) selon la revendication 9 ou 10, **caractérisé en ce que** le corps de rotor présente au moins un disque d'extrémité, lequel fait saillie au-delà du corps de rotor dans la direction radiale.

12. Rotor à effet Magnus (10) selon l'une des revendications 9 à 11, **caractérisé en ce que** le corps de rotor présente au moins un raccord de montage pour un arbre rotatif en son intérieur.

13. Rotor à effet Magnus (10) selon l'une des revendications 9 à 12, **caractérisé en ce qu'**il est prévu exactement un corps de rotor enroulé ou **en ce qu'**il présente plusieurs corps de rotor enroulés, lesquels sont reliés les uns aux autres dans la direction longitudinale.
